# EUROPEAN PATENT SPECIFICATION

(11) **EP 4 437 240 B1**
(45) Date of publication and mention of the grant of the patent: **04.11.2026**
(21) Application number: 22899532.0
(22) Date of filing: 23.11.2022
(51) Int. Cl.: F16B 21/09, F16B 21/18, F16L 37/34, B67D 7/36, F16L 37/084

(54) **ENERGY TRANSMITTING STUD-AND-SOCKET RELEASABLE FASTENING SYSTEM**
ENERGIEÜBERTRAGENDES, DURCH BOLZEN UND BUCHSE LÖSBARES BEFESTIGUNGSSYSTEM
SYSTÈME DE FIXATION LIBÉRABLE PAR GOUJON ET DOUILLE DE TRANSMISSION D'ÉNERGIE

(30) Priority: 23.11.2021 US 202163282499 P
(43) Date of publication of application: 02.10.2024
(73) Proprietor: Manly, Joseph, A., Chelsea, MI 48118 (US)
(72) Inventor: Manly, Joseph, A., Chelsea, MI 48118 (US)
(74) Representative: Lewis Silkin LLP
(86) International application number: PCT/US2022/080384
(87) International publication number: WO 2023/097247

(56) References cited:
- US-A- 3 498 322
- US-A- 6 024 124
- US-A1- 2005 001 425
- US-A1- 2005 081 929
- US-A1- 2005 081 929
- US-A1- 2009 297 260
- US-A1- 2011 263 144
- US-A1- 2013 206 261

## Description

### CROSS REFERENCE TO RELATED APPLICATIONS

This application claims priority to Provisional Patent Application 63/282,499 filed on November 23, 2021.

### BACKGROUND OF THE INVENTION

Field of the Invention. The invention relates generally to a stud-and-socket releasable fastening system, and more particularly to an energy transmitting stud-and-socket releasable fastening system.

Description of Related Art. Stud-and-socket releasable fastening systems are well-known in the art. Reference is made to the US Patent No. 10,247,520 to Manly, issued April 2, 2019, disclosing a robust stud-and-socket type coupling assembly for rapidly connecting and disconnecting an accessory tool to a support structure through a straight-line motion. The assembly comprises a first connection part having a socket in the exemplary form of a tang slot. A core plug is slidably disposed in the socket. A second connection part, in the exemplary form of an accessory tool, includes a stud that has a cross-section configured for mated fit within the socket of the first connection part. A bolt is supported for sliding movement inside the first connection part. The bolt is engageable with the stud of the second connection part in the bolted position to selectively lock together the first and second connection parts.

The stud-and-socket releasable fastening system of US Patent No. 10,247,520 enables quick and secure mechanical connection between two members for all sorts of applications. There is a need in the art, however, to improve upon the teachings of US Patent No. 10,247,520 by introducing additional functionality, and hence further expanding the range of applications suitable for stud-and-socket releasable fastening systems. Further examples of prior art disclosures in this field include: US2005/081929A1, US6024124A and US2005/001425A1.

### BRIEF SUMMARY OF THE INVENTION

The present invention is an energy transmitting stud-and-socket releasable fastening system. The system comprises a first connection part associated with an energy source and a second connection part associated with an energy consuming load. The second connection part is configured to be selectively coupled and decoupled to the first connection part. An upstream conduit has an upstream terminal end disposed in the first connection part. The upstream conduit is configured to transmit energy from the energy source to the upstream terminal end. A downstream conduit has a downstream terminal end disposed in the second connection part. The downstream conduit is configured to transmit energy from the downstream terminal end to the load. A socket is disposed in either the first or second connection part. The socket has an entrance. A core plug is slidably disposed in the socket for movement between extended and depressed conditions. The core plug has a nose end in registry with the entrance of the socket when the core plug is in its extended condition. However, the nose end is recessed inside the socket when the core plug is in the depressed condition. A bolt is supported relative to the socket for movement between set and deployed positions. A stud extends from the other of the first and second connection parts. I.e., in cases where the socket is disposed in the first connection part, the stud extends from the second connection part, and vise-versa. The stud has a distal leading tip configured to displace the core plug away from the entrance of the socket. The stud becomes mechanically constrained within the socket by the bolt when the bolt is moved from its set position to its deployed position. In this manner, the first and second connection parts are securely fastened together. Either the upstream or downstream terminal end is disposed in the stud. The other terminal end is disposed in the core plug and is moveable therewith as the core plug moves between the extended and depressed conditions. I.e., in cases where the upstream terminal end is disposed in the core plug the downstream terminal end is disposed in the stud, and vise-versa. The upstream terminal end operatively couples with the downstream terminal end when the stud is securely constrained within the socket to enable transmission of energy from the upstream conduit to the downstream conduit.

The present invention improves upon the teachings of US Patent No. 10,247,520 by introducing additional functionality of integrated energy transmission, and hence further expanding the range of applications suitable for stud-and-socket releasable fastening systems. The invention enables the capability of attaching two objects together quickly and securely with an energy transfer enabled therebetween. Locating the upstream and downstream terminal ends in the stud and core plug eliminates or reduces the need to design connections between the upstream and downstream conduits elsewhere on or around the first and second connections parts.

### BRIEF DESCRIPTION OF THE SEVERAL VIEWS OF THE DRAWINGS

These and other features and advantages of the present invention will become more readily appreciated when considered in connection with the following detailed description and appended drawings, wherein:
Figure 1 is prior art depiction of a stud-and-socket fastening system taken from the Applicant's own US Patent No. 10,247,520, wherein the first and second connection parts are shown in a separated, uncoupled disposition;
Figure 2 is a prior art depiction as in Figure 1, but with the first and second connection parts shown in a coupled disposition;
Figure 3 is a highly simplified perspective view of the chief mechanical components of a stud-and-socket fastening system according to one embodiment of the present invention, and with the first and second connection parts shown in a separated, uncoupled disposition;
Figure 4 is another highly simplified perspective view of the fastening system of Figure 3, from a slightly anteverted vantage showing the first and second connection parts brought together in preparation for coupling;
Figure 5 is an elevation view of an exemplary structure constructed of T-slot extrusion members of the type commonly used in industrial applications, wherein four (4) stud-and-socket releasable fastening systems of the present invention are used to enable quick and secure attachment of a lid or cap;
Figure 6 is a fragmentary perspective view of an exemplary application of the present invention in which a light fixture is poised for connection with a supporting frame to enable the transfer of energy so that the light fixture can be operated;
Figure 7 is an exemplary schematic electrical diagram of the light fixture embodiment of Figure 6 showing the connection parts separated;
Figure 7A is an enlarged view of the region indicated at 7A in Figure 7;
Figure 8 is a schematic electrical diagram as in Figure 7 showing the connection parts operationally connected to enable the transfer of energy to the lighting fixture;
Figure 8A is an enlarged view of the region indicated at 8A in Figure 8;
Figure 9 is a perspective view of an alternative embodiment in which additional upstream and downstream conduits enable applications requiring more electrical and/or light energy transfer than can be accommodated through the socket and stud alone;
Figure 10 is a perspective view of the alternative embodiment of Figure 9 as seen from a different vantage;
Figure 11A-D are a sequence of simplified cross-sectional views of an embodiment of the present invention configured to transfer fluid energy, with the first and second connection parts shown progressively moving from an uncoupled disposition into a fully coupled disposition;
Figure 12 is a perspective view of an alternative embodiment in which additional upstream and downstream conduits enable applications requiring more fluid energy transfer than can be accommodated through the socket and stud alone;
Figure 13 is a perspective view of the alternative embodiment of Figure 12 as seen from a different vantage;
Figure 14 is a fragmentary perspective view of a still further alternative embodiment in which the first and second connection parts are fitted with a ganged plurality of power-transmitting stud-and-socket coupling systems as applied in the context of an industrial robotic application; and
Figure 15 is a simplified perspective view of the first and second connection parts of Figure 14.

### DETAILED DESCRIPTION OF THE INVENTION

The present invention is a stud-and-socket releasable fastening system for mechanically coupling two members, referred to herein generically as a first connection part 20 and a second connection part 22. As will be described more fully, the first 20 and second 22 connection parts can be any two members that are required to be quickly and selectively connected to one another, and just as conveniently disconnected.

A socket 24 is disposed in either the first connection part 20 or the second connection part 22. Throughout the following descriptions, the socket 24 will be associated exclusively with the first connection part 20. However, it will be appreciated that the assignment or designation of which connection part 20, 22 is to receive the socket 24 is interchangeable and subject to the designer's choice. The socket 24 has an entrance 26. In the examples, the entrance 26 is formed in a cover plate 27 that is attached to the first connection part, however other designs are possible. The socket 24 is shown having a recessed base 28 spaced from the entrance 26, however it is also contemplated the socket 24 could be bottomless. Moreover, the socket 24 is illustrated throughout as a straight axial formation that establishes a linear path. That is to say, the shaft-like cavity of the socket 24 can be understood as defining an axis centered or generally centered at the entrance 26 and extending along the length of the socket 26 to its recessed base 28. However, it is also contemplated that the socket 24 could, in some configurations, be curved so as to establish an arcuate or spiraling path.

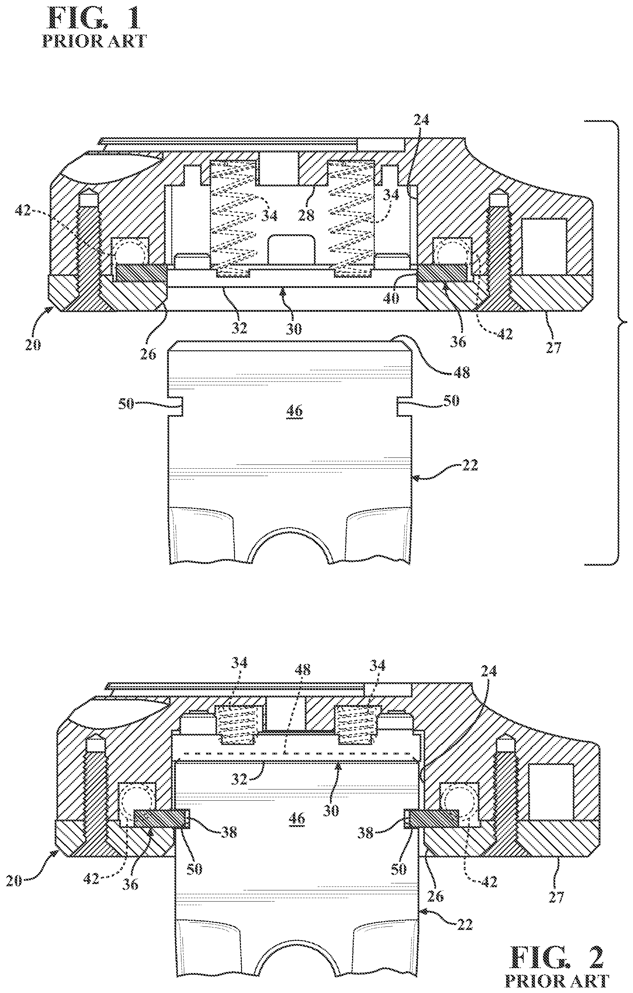

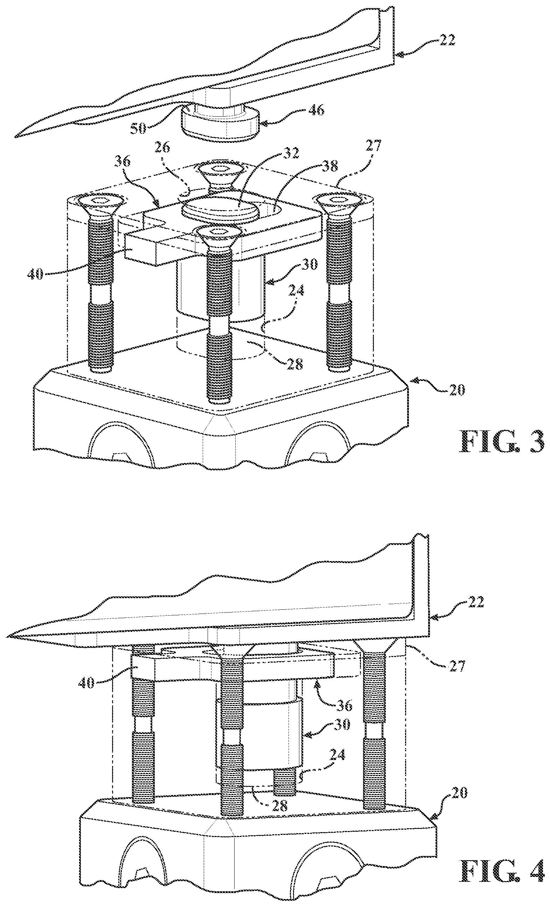

The socket 24 may have any desirable cross-sectional shape, including circular. However circular has the disadvantage of being naturally non-polarized in the sense that its shape alone does not indicate a particular rotational orientation with a mating element. It is therefore desired, but not required, that the socket have a non-circular shape that is nevertheless relatively easy to manufacture. Square shapes are contemplated but are also naturally non-polarized in the sense that its shape permits four (4) rotational orientations with a mating element. Likewise, rectangular shapes are also contemplated as suggested in Figures 1 and 2 but are still naturally non-polarized in the sense that a rectangular shape permits two (2) rotational orientations. In the example of Figures 3-15, the socket 24 is shown having a generally D-shaped cross-section. A D-shaped cross-section is advantageous in that it is relatively easy to manufacture and offers a fully polarized shape by having only one rotational orientation for a mating element of the same cross-sectional shape. Those of skill in the art will appreciate that cross-sectional shapes other than D-shaped are also possible and readily adaptable for use in the present invention.

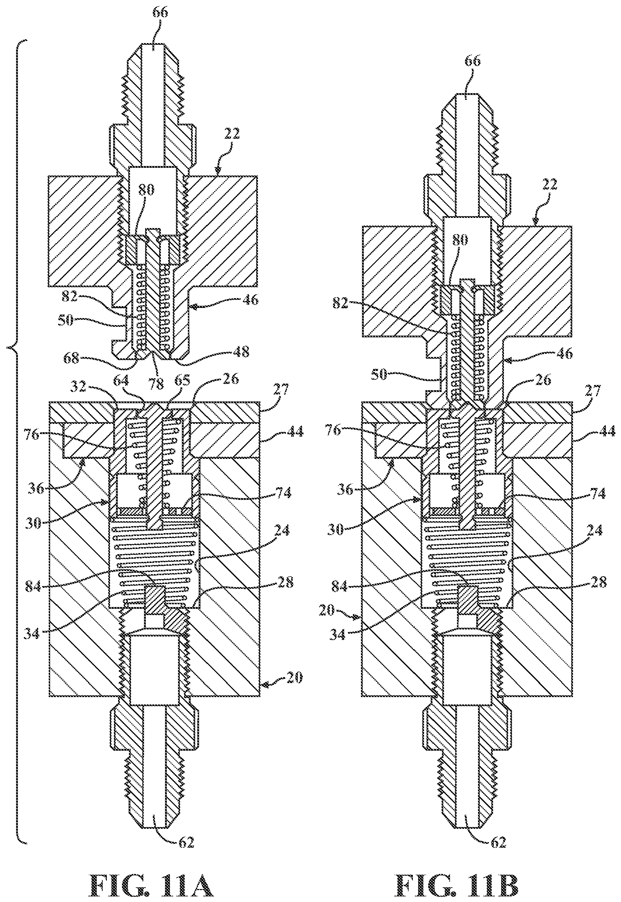

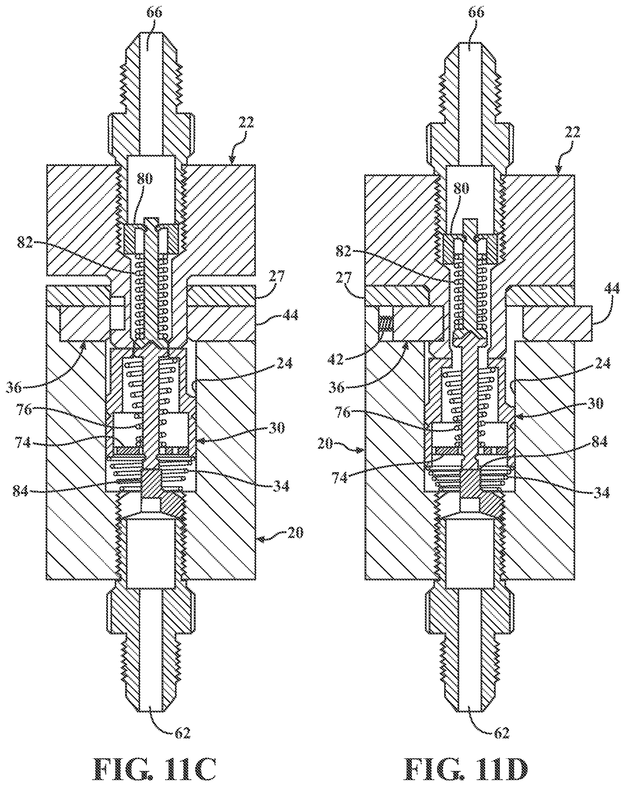

A core plug 30 is disposed in the socket 24 for movement between extended and fully depressed conditions within the socket 24. The core plug 30 may be seen in the extended condition in Figures 1, 3, 7, 7A and 11A. The core plug 30 is shown in the fully depressed condition in Figures 2, 4, 8, 8A and 11D. The core plug 30 is depicted in intermediate, or transitory, positions between the extreme conditions of extended and fully depressed in Figures 11B and 11C. The core plug 30 has a nose end 32 in registry with the entrance 26 of the socket 24 when the core plug 30 is in the extended condition. However, the nose end 32 sinks out of registry with the entrance 26, becoming recessed inside the socket 24, as the core plug 30 moves toward the depressed condition.

One or more core springs 34 are operatively engaged with the core plug 30, so as to urge the core plug 30 toward the extended condition. The core spring 34 is shown in the exemplary forms of a singular coil compression spring in Figure 11A-D and a pair of coil compression springs in Figures 1, 2, however other forms of biasing devices may be used to urge the core plug 30 toward the extended condition.

A bolt 36 is supported relative to the socket 24 for movement between set and deployed positions. In the illustrated examples where the socket 24 is associated with the first connection part 20, the bolt 36 is likewise supported for movement by, or with respect to, the first connection part 20. Figures 1, 3, 4, 7, 7A and 11A depict the bolt 36 in its set position, whereas Figures 2 and 11D shown the bolt 36 in the deployed position. The relationship between the bolt 36 and core plug 30 is such that the bolt 36 is only able to move to its deployed position when the core plug 30 is in its fully depressed condition. And its corollary: the core plug 30 is only able to occupy its extended condition in registry with the entrance 26 when the bolt 36 is in its set position. It can perhaps be more descriptively stated that the core plug 30 operates something like a trigger holding the bolt 36 in its set position. When the core plug 30 is displaced a sufficient distance away from the entrance 26, the bolt 36 automatically shifts toward its deployed position.

The bolt 36 can take many different configurations. In some contemplated embodiments, the bolt 36 is a rotary member supported for turning or twisting movement between the set position and the deployed position. In other contemplated embodiments, the bolt 36 is supported for pivotal movement. Indeed, many shapes and motions are possible to accomplish a bolt 36 that is moveable between set and deployed positions. However, in the illustrated examples, the bolt 36 is a platelike member supported for siding movement relative to the axial extent of the socket 24. That is to say, the bolt 26 is captured in a sliding track in the first connection part 20 just below the cover plate 27 so that it can slide back-and-forth across the socket 24.

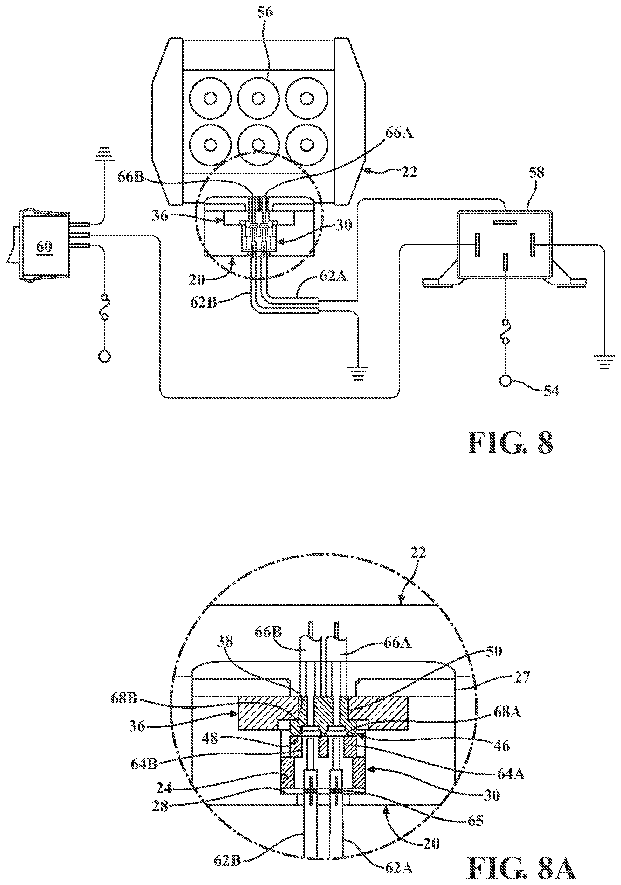

In some contemplated embodiments, the bolt 36 is stationed along only one side of the socket 26. It can be understood that by positioning the bolt 36 along only one side of the socket 26, the bolt 36 can be said to partially surround the socket 24 adjacent its entrance 26. In the illustrated examples, however, the bolt 36 more fully surrounds the socket 26. That is to say, the bolt 36 straddles the socket 26 on opposite sides, which has the effect of increasing structural integrity of the resulting couple with the second connection part 22 as shown in Figures 2, 8 and 8A.

The bolt 36 has at least one tooth 38 capable of selectively overlapping the socket 24 when the bolt 36 is in the deployed position. The tooth 38 can take a wide variety of forms. In the accompanying drawings, the tooth 38 is rather simply formed along a peripheral edge (or edges) of the bolt 36. When the bolt 36 is in its deployed position, the tooth 38 passes through a portion of the socket 24. However, when in the set position, no portion of the bolt 36 obstructs the socket 24.

In the example of Figure 3, the bolt 36 is a generally rectangular body having an open inner region 40 that fully surrounds the socket 24. The shape of the open inner region 40 in Figure 3 (as well as in Figures 4-15) has the appearance of overlapping circles, as suggested by the outline of the number "8," in which one circle is slightly smaller. Although, in the example of Figures 1 and 2, the shape of the open inner region 40 is more elongated, which can be confirmed by reference to the aforementioned US Patent No. 10,247,520. Indeed, the shape of the open inner region 40 can be modified to suit the intended application.

As previously mentioned, the tooth 38 can be formed along a peripheral edge of the bolt 36. In the illustrated examples where the bolt 25 fully surrounds the socket 26, the one or more teeth 38 are formed within the open inner region 40 of the bolt 36. I.e., the peripheral edges are those along the interior edges of the open inner region 40. The embodiment of Figures 1-2 uses opposing teeth 38, whereas the embodiments of Figures 3-15 utilize a single tooth 38.

One of more bolt springs 42 are disposed to bias the bolt 36 toward the deployed position. The example of Figures 1-2 illustrates the use of two bolt springs 42, whereas the example of Figure 11D suggests only one bolt spring 42. In both cases, the bolt springs are depicted as being of the coil compression variety, however those of skill in the art will appreciate that any other type of biasing device could be used with appropriate accommodations.

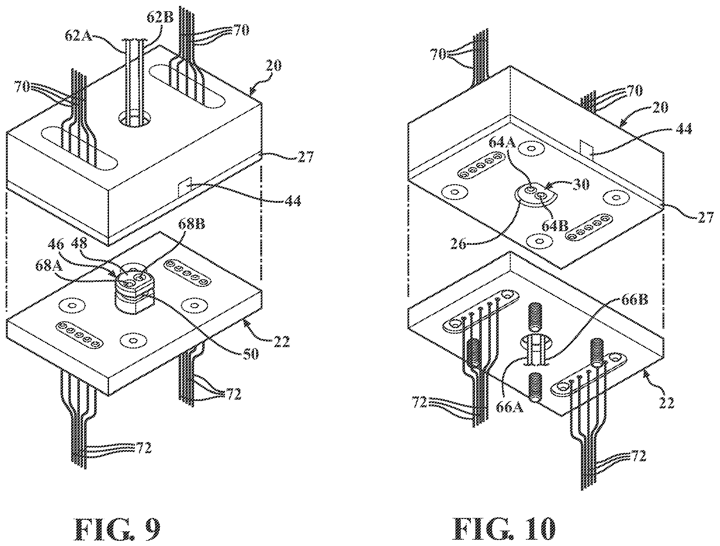

The bolt 36 has an actuator 44 configured to forcibly shift the bolt 36 from the deployed position toward the set position against the bias of the bolt spring 42. The actuator 44 can be a mechanized device separate from the bolt 36, such as a solenoid or stepper motor (not shown). But in the illustrated examples the actuator 44 takes the form of a simple push button extending integrally from the bolt 36, perhaps best seen in Figures 3, 4 and 15. By depressing the actuator 44 such as with a thumb or finger, the bolt 36 is moved toward its set position. The size and shape of the actuator 44 can be designed so that when the bolt 36 is in its deployed position the actuator 44 protrudes from the first connection part 20, thus inviting a user to depress it. However, when the bolt 36 is in its set position the actuator 44 is flush with the side of the first connection part 20. This latter condition is well-illustrated in Figures 9-11C and 12-13.

As mentioned, the present invention is a stud-and-socket releasable fastening system for mechanically coupling the first connection part 20 with the second connection part 22. These first 20 and second 22 connection parts can be configured for a wide range of uses, a few of which are mentioned herein but many more of which will become apparent to those of skill in the art. The socket 24 is described as being associated with either the first connection part 20 or the second connection part 22, however for convenience the illustrations and descriptions associate the socket 24 exclusively with the first connection part 20. In a corresponding fashion, a stud 46 extends from the other of the first 20 and second 22 connection parts. The stud 46 can be associated with either the first connection part 20 or the second connection part 22, provided it is the complement to the socket 24. For convenience, the illustrations and descriptions associate the stud 46 exclusively with the second connection part 22. It must be understood that the assignment or designation of which connection part 20, 22 is to receive the socket 24 and which to host the stud 46 is interchangeable and subject to the designer's choice.

Generally stated, a primary function of the stud 46 is to become mechanically constrained within the socket 24 so as to effect a mechanical coupling of the first 20 and second 22 connection parts. That is to say, the stud 46 and socket 24 are designed to mate with one another. When the stud 46 is fully seated in the socket 24, the bolt 36 is enabled to move from its set position to its deployed position, which has the effect of trapping the stud 46 in the socket 26. When the stud 46 is thus confined in the socket 26, the first 20 and second 22 connection parts are effectively securely fastened together.

The stud 46 has a cross-sectional shape designed to slide into the socket 24 with a smooth clearance fit. Thus, the cross-sectional shape of the socket 24 will dictate the cross-sectional shape of the stud. In the example of Figures 1-2, the stud 46 is rectangular in cross-section. However, in the example of Figures 3-15, the stud 46 has a generally D-shaped cross-section configured to mate with the D-shaped cross-section of the socket 24.

The stud 46 has a distal leading tip 48 configured to displace the core plug 30 away from the entrance 26 of the socket 24. As was mentioned, the core plug 30 operates something like a trigger holding the bolt 36 in its set position against the biasing force of the bolt spring 42. As such, the stud 46 can be perceived as the actor that causes the core plug 30 to be displaced from the entrance 26. The point of contact occurs at the distal leading tip 48 of the stud 46. When the core plug 30 is displaced away from the entrance 26, the bolt 36 automatically shifts toward its deployed position. The stud 46 is formed with a catch 50 configured to receive the tooth 38 of the bolt 36 when the bolt 36 is in the deployed condition. The catch 50 can, of course, take on many different configurations as may be dictated by the particular configuration of the tooth 38. In the illustrated examples, the catch 50 takes the form of one or more notches formed in the exterior of the stud 46, axially spaced a sufficient distance from the distal leading tip 48 so as to align with the bolt tooth/teeth 38 when the core plug 30 has been moved to its fully depressed condition.

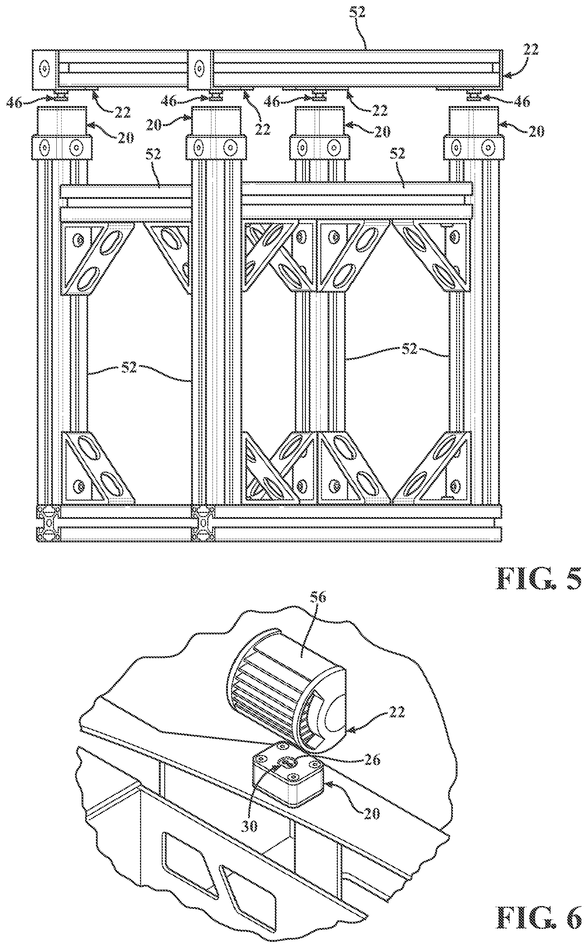

The operation of the mechanical coupling will now be described with reference to the several illustrated examples. In the example of Figures 1 and 2, which are taken from US Patent No. 10,247,520 and thus labeled as prior art, the first connection part 20 is depicted in the form of a universal accessories dock and the second connection part 22 is depicted in the form of an accessory knife blade. To be clear, the dock and knife blade are merely examples of the inventor's own prior art system whose mechanical coupling characteristics are similar to those of the present invention depicted in Figures 5-15. Although Figures 1 and 2 are prior art depictions, those of skill in the art will appreciate that they are nevertheless instructive and worthy of mention toward understanding the operational characteristics of the present invention, which present invention is an improvement of the embodiment is shown in Figures 1 and 2. (The improvement has thus far in the description remained unmentioned, but will be revealed subsequently as the novel integration of energy transmission through the coupling elements.) It is perhaps also helpful to show that the depictions of an accessory knife blade serve to underscore the wide variety of different applications contemplated for the first 20 and second 22 connection parts of this present invention, albeit with the addition of the improvement features to be subsequently discussed. Therefore, Figures 1 and 2 are described here in detail for their value in expositing the mechanical coupling characteristics. A person of ordinary skill in the art could modify the embodiment of Figures 1 and 2 to include the improvement features of this invention.

Continuing with Figures 1-2, the first connection part 20 has a cover plate 27 in which is formed an entrance 26 to a cavity-like socket 24. The entrance 26 is preferably surrounded by funnel-like tapers or generous chamfers that facilitate the coupling process. A core plug 30 is slidably disposed in the socket 24. The core plug 30 has a peripheral shape that is generally equal to the peripheral shape of the stud 46 so that both slide with somewhat equal smoothness in the socket 24. When the first connection part 20 is not coupled to the second connection part 22, a nose end 32 of the core plug 30 is located in the entrance 26 (Figure 1). In this position, the nose end 32 acts like a stopper to prevent debris from entering the socket 24. At least one core spring 34 is operatively disposed in bias against the core plug 30. In the illustrated embodiment, a pair of core springs 34 are operatively disposed in the socket 24 and biased against the core plug 30. The core plug 30 is shown having stop tabs that ride up and down in tab tracks formed in the socket 24. The stop tabs position the nose end 32 of the core plug 30 flush with or slightly recessed at the entrance 26. Spring seats may be formed in the core plug 30 to help maintain position of the core springs 34.

A bolt 36 is operatively disposed in the first connection part 20 for selective movement between set and deployed positions. The bolt 36 includes at least one, but preferably two, teeth 38 formed within the interior confines of an open inner region 40. In the set position, the first connection part 20 is disconnected from the second connection part 22 as in Figure 1. The bolt 36 is supported on slide tracks within the first connection part 20 for movement transverse to the path of the socket 24. A pair of compression-type bolt springs 42 push directly against the bolt 36. An actuator 44 extends from the bolt 36. When the user presses on the actuator 44, the bolt 36 slides against the bolt springs 42 in movement toward its deployed position.

A stud 46 extends from the second connection part 22 which, although shown as a knife blade, could be any suitable thing or object. The stud 46 has a pair of notch-like catches 50 configured to interact with the bolt teeth 38. The entrance 26 and socket 24 are both shaped to receive the stud 46 with an easy sliding fit but with relatively little free play so that the second connection part 22 is not perceived to wiggle when connected to the first connection part 20.

Figure 1 shows the stud 46 before it enters the socket 24, whereas Figure 2 shows the stud 46 fully seated in the socket 24 with the first 20 and second 22 connection parts securely coupled together. During the coupling process, a distal leading tip 48 of the stud 46 is guided to the entrance 26 of the socket 24 where it immediately encounters the nose end 32 of the core plug 30. The nose end 32 of the core plug 30 may be formed with a concavity that receives a chamfered or rounded distal leading tip 48 of the stud 46 in self-centering fashion. With continued insertion of the stud 46, the core plug 30 is pushed ahead and deeper into the socket 24 compressing the core spring 34. The core plug 30 pushes up through the open inner region 40 of the bolt 36, followed immediately be the stud 46 in a smooth continuous motion. When the catches 50 in the stud 46 align with the bolt teeth 38, the bolt 36 automatically slides toward its deployed position under the influence of the bolt springs 42. The teeth 38 seated in the catches 50 effectively trap the stud 46 in the socket 24 and couple the first 20 and second 22 connection parts together, as depicted in Figure 2.

In order to decouple the first 20 and second 22 connection parts from one another, the user depresses the actuator 44 (not visible in Figures 1 or 2), which has the effect of shifting the teeth 38 out of register with the catches 50 and allowing the stud 46 to be withdrawn. As the stud 46 is withdrawn from the socket 24, the pressure of the core springs 34 assists with a light pushing action to eject the first connection part 20. Because the core plug 30 has a peripheral shape that is matched to the peripheral shape of the stud 46, the nose end 32 of the core plug 30 follows the stud 46 as it freely passes through the bolt 36 and into the entrance 26 in the bottom plate 76. The stud 46 is withdrawn completely from the first connection part 20, but the core plug 30 is mechanically arrested at the entrance 26 in its extended condition holding the bolt 36 in its set position. That is to say, as the first connection part 20 uncouples from the first connection part 20, the core plug 30 automatically seats itself inside the open inner region 40 of the bolt 36. The core plug 30 thus effectively jams itself in the bolt 36, holding the bolt springs 42 compressed, and continues to restrain the bolt 36 in this set condition until the stud 46 is re-inserted.

Figures 3 and 4 shown embodiments of the first 20 and second 22 connection parts in a different configuration and from differing perspectives. For example, the embodiment of Figures 3 and 4 could be perceived as connection points for a structure fabricated from T-slot extrusion members 52 like that depicted in Figure 5. That is to say, one contemplated application of the present invention is within an industrial setting where useful structures can be quickly and securely erected from using a network of T-slot extrusion members 52. For simplicity, Figures 3 and 4 show only the core plug 30 and bolt 36 components of the first connection part 20, and the stud 46 of the second connection part. Considering the exemplary box-like base structure in Figure 5 assembled from commercially available T-slot extrusion members 52, four (4) stud-and-socket releasable fastening systems of the present invention are used to enable quick and secure attachment of a lid or cap. In the illustrated configuration of Figure 5, the box-like base structure represents the first connection part 20 and lid or cap represents the second connection part 22.

As alluded to, the present invention improves upon known stud-and-socket type connection systems by the novel integration of energy transmission through the coupling elements. In particular, when the first connection part 20 is associated with an energy source 54 and the second connection part 22 associated with an energy consuming load 56, coupling of the first 20 and second 22 connection parts will automatically and concurrently effectuate energy transmission from the energy source 54 to the energy consuming load 56. The energy transmitted through the stud-and-socket type connection system of this invention can be of any type and used for any purpose including for the delivery of power and/or communication signals. Exemplary forms of energy include, but are not limited to, electricity, fluids (hydraulics and pneumatics) and light, and well as mechanical motion. There is no intent to limit the forms or types of energy that can be transmitted through the first 20 and second 22 connection parts of this invention.

The example of Figure 6 is of a detachable lighting fixture, such as could be found on an off-road or utility vehicle. This context is offered for illustrative purposes only, considering that a person of skill in the art will be informed by this example to envision other possible applications. The first connection part 20 is fixed to the vehicle frame or body whereas the second connection part 22 is the body of the lighting fixture.

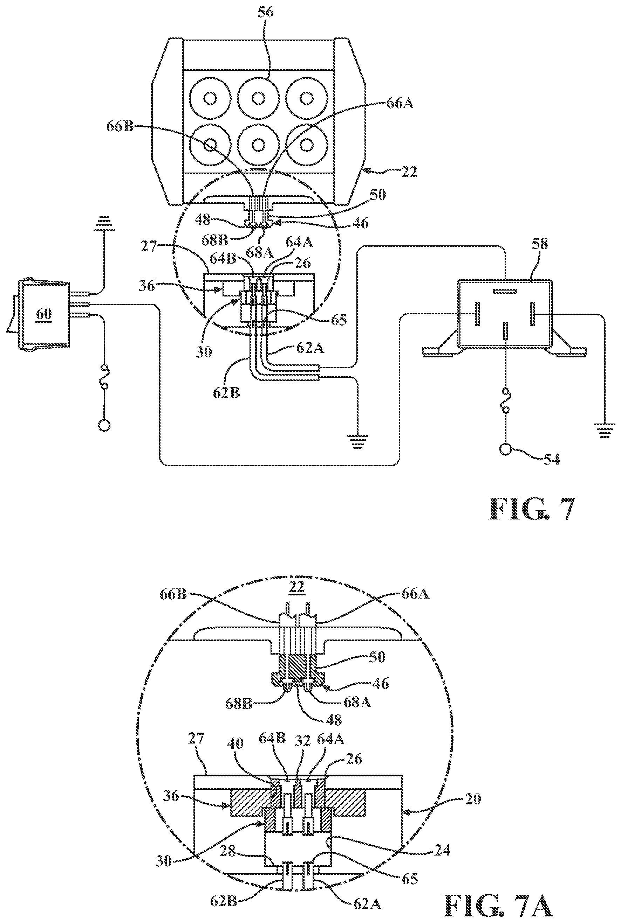

Figures 7-8A represent schematic illustrations in support of the electrical lighting example of Figure 6. The first connection part 20 is associated with the energy source 54 which could be a standard vehicular 6- or 12-volt battery. In another context easily imagined, the energy source 54 for a lighting fixture could be voltage supplied from a standard AC line or from a low-voltage transformer. Of course, many options are possible. Figures 7 and 8 show a lead from the energy source 54 operatively connected to a first terminal of a basic relay 58. A second terminal of the relay 58 is operatively connected to a switch 60. A third terminal of the relay 58 is operatively connected to the first connection part 20. And a fourth terminal of the relay 58 is operatively connected to electrical ground.

The first connection part 20 has at least one upstream conduit 62 configured to transmit energy from the energy source 54 to an upstream terminal end 64. In instances where the energy source 54 is electrical energy, the upstream conduit 62 is an electrically conductive wire or element. In the case of Figures 7-8A, two upstream conduits 62A, 62B are shown, each having a respective upstream terminal end 64A, 64B. The previously mentioned lead from the energy source 54 to the first terminal of the relay 58 corresponds with the upstream conduit 62A. The downstream conduit 62B is operatively connected to electrical ground in this example. In some contemplated embodiments, the first connection part 20 can be configured with more than two upstream conduits 62A,B...n, each having a respective upstream terminal end 64A,B...n.

The upstream terminal ends 64A, 64B are disposed in the core plug 30 and are moveable therewith as the core plug 30 moves between the extended and depressed conditions. This can be appreciated by comparing Figures 7A and 8A, where Figure 7A has the core plug 30 in the extended condition and in the depressed condition for Figure 8A.

In the illustrated examples of Figures 7-8A, the upstream conduit 62 includes a switch-like interrupter feature 65 associated with each of the upstream terminal ends 64A, 64B. The interrupter 65 has an open condition that effectively prohibits energy from reaching the upstream terminal ends 64A, 64B when the core plug 30 is in the extended condition. However, when the core plug 30 is in is fully depressed condition, the interrupter 65 closes enabling the transmission of energy to the upstream terminal ends 64A, 64B. This can be understood as a safety feature, in which the bare exposed upstream terminal ends 64A, 64B will be prevented from giving an inadvertent electrical shock when the second connection part 22 is not in place. The interrupter 65 feature is clearly seen in Figures 7A and 8A comprising a variable gap or spacing between the core plug 30 and the upstream conduits 62A, 62B. It may be helpful to understand the interrupter 65 and being in the functional form of a poppet valve, in that the components cycle up and down (or back-and-forth) between open and closed conditions.

The second connection part 22 likewise has at least one downstream conduit 66 configured to transmit energy to the energy consuming load 56 from a downstream terminal end 68 disposed in the stud 46. In instances where the energy source 54 is electrical energy, the downstream conduit 66 is an electrically conductive wire or element. In the case of Figures 7-8A, two downstream conduits 66A, 66B are shown, each having a respective downstream terminal end 68A, 68B.

The upstream terminal ends 64A, 64B are aligned for engagement with the downstream terminal ends 68A, 68B when the distal leading tip 48 of the stud 46 depresses the core plug 30 away from the socket entrance 26. That is to say, the upstream terminal ends 64A, 64B operatively couple with the downstream terminal ends 68A, 68B when the stud 46 is securely constrained within the socket 24. The upstream terminal ends 64A, 64B may be configured with locater profiles, and likewise the downstream terminal ends 68A, 68B with complementary profiles adapted to self-center with one another upon direct engagement. The upstream 64A, 64B and 68A, 68B downstream terminal ends can be fashioned from commercially available spring-loaded contacts, such as those offered by MILL-MAX Mfg. Corp. (New York, USA).

Coupling of the second connection part 22 to the first connection part 20 in the manner previously described causes the core plug 30 to descend in the socket 24. Upon nearing its fully depressed condition, the interior portions of upstream terminal ends 64A, 64B come into electrical contact with their respective upstream conduits 62A, 62B, thus closing the electrical circuit and allowing energy to flow to the lighting fixture (subject to operator control of the switch 60). This is perhaps best shown in Figure 8A where the upstream terminal ends 64A, 64B can be seen in direct contact with the downstream terminal ends 68A, 68B thus enabling transmission of energy from the upstream conduit 62 to the downstream conduit. As a consequence, the light fixture (the load) can be made operable at will by the user, via the switch 60. At any time the user wishes to remove or replace the light fixture 22, the bolt 36 is actuated (via actuator 44), enabling decoupling of the first 20 and second 22 connection parts.

Although a singular light fixture is described in connection with the example of Figures 6-8A, those of skill in the art will envision this invention applied in many other ways even within the limited context of powered vehicular systems. Taking inspiration from Figure 5, one can easily imagine a vehicular application in which an entire lightbar system is quickly and securely connected/disconnected from a vehicle. In another example, the electrical power transmitting stud-and socket system of this invention is used to quickly and securely connect a sound, navigation and/or computer system in a land or marine vehicle. The fleet trucking and law enforcement markets are examples of two fields of use in which specialized systems may be required to frequently plug in and out of use. Applications in the competitive environment of robotics competitions can be easily envisioned. The electrical power transmitting stud-and socket system can be deployed to rapidly replace broken elements or attach different kinds of mechanized features during a competition. Thinking outside of vehicular contexts, the electrical power transmitting stud-and socket system of this invention could be used attach accessory lights in a home or building. In industry, power driven accessories like fans and heaters (to name only two) can be quickly and securely attached when needed and just as quickly detached when the need is passed. Indeed, the applications of this invention to transmit electrical energy through a stud-and socket coupling system are seemingly limitless.

Although the example of Figures 6-8A portray the transmission of electrical energy, those of skill in the art will be able to envision a similar system modified to transmit light energy. That is, if the energy source 54 is light energy, such as in a fiber optic system, the upstream 62A,B...n and downstream upstream conduits 66A,B...n conduits could be fabricated as light transmissive wave guides, e.g., fiber-optic cables. In applications requiring data transmission, the stud-and socket system of this invention could be used to quickly and securely connect the signal source 54 to a signal receiver 56.

Figures 9 and 10 represent extensions of the aforementioned electrical energy and light energy transmitting modes. In this example, additional upstream conduits 70 are supported in the first connection part 20 but do not pass through the socket 24 or core plug 30. Likewise additional downstream conduits 72 are supported in the second connection part 22 but do not pass through the stud 46. These additional conduits 70, 72 are aligned so as to make respectively operative, power-transmitting connections when the first 20 and second 22 connections parts are coupled via the stud-and socket system of this invention. Thus, in applications requiring more discrete electrical or light signals than can be accommodated through the socket 24 and stud 46, this embodiment offers a convenient solution without sacrificing connection speed or structural integrity. The terminal ends of the additional conduits 70, 72 can be fashioned from commercially available spring-loaded contacts, such as those offered by MILL-MAX Mfg. Corp. (New York, USA).

As mentioned, the stud-and socket system of this invention can be configured to accommodate the transmission of fluid as the type of energy produced by the energy source 54. Perhaps the most common types of fluid energy are hydraulics (liquids) and pneumatics (gasses). Reference is made to Figure 11A-D , where the first connection part 20 is somewhat arbitrarily designated as the lower part and the second connection part 22 as the upper part to maintain continuity with the respective socket 24 and stud 46 associations. It will be appreciated that, without departing from the spirit of this invention, the first connection part 20 could be designated as the upper part associated with the stud 46 and the second connection part 22 as the lower part associated with the socket 24. This interchangeability of the socket 24 and stud 46 vis-à-vis the first 20 and second 22 connection parts is applicable throughout the several embodiments.

Returning again to Figure 11A-D , the upstream 62 and downstream 66 conduits here comprise fluid conductive lines or hoses. For purposes of this illustration, the fluid transmitted can either be hydraulic or pneumatic. The upstream conduit 62 has an upstream terminal end 64 and the downstream conduit 66 has a downstream terminal end 68. Comparisons to the electrical example of Figures 7-8A should be apparent to those of skill in the art. And as in the electrical example, the upstream conduit 62 includes an interrupter 65 feature associated with the upstream terminal end 64. Given the fluidic nature of energy, it is perhaps more appropriate to classify the interrupter 65 here as a sort valve instead of a switch.

The interrupter 65 has an open condition that effectively prohibits fluid energy from reaching the upstream terminal end 64 when the core plug 30 is in the extended condition. However, when the core plug 30 is in is fully depressed condition, the interrupter 65 closes enabling the transmission of fluid energy to the upstream terminal end 64. The interrupter 65 feature can be perceived quite easily here as a poppet valve. The head of this poppet valve carries the previously mentioned locator feature, in the form of a small convex spike, that aides in self-centering with the stud 46. In this exemplary embodiment, the interrupter 65 is fitted with a disc-like keeper 74 that is captured inside a skirt-like recess in the core plug 30. A backing spring 76 is also located inside a skirt-like recess, pressed between the keeper 74 and the underside of the core plug 30.

The stud 46 also includes a safety valve 78 integrated with its downstream terminal end 68. The safety vale 78 shown in this example is of the poppet type having a head formed with a dimpled or concave locator feature to complement the convex feature on the head of the interrupter 65. A flow-through retainer 80 is captured in the second connection part 22 to help hold a stem of the safety valve 78 in position. A safety spring 82 is located inside the stud 46 and presses between the retainer 80 and the head of the safety valve 78.

Figure 11A-D represent a sequence or progression of movement in which the first 20 and second 22 connection parts are brought together from an uncoupled state to a securely coupled state enabling fluid transmission therebetween. In Figure 11A, the first 20 and second 22 connection parts completely separated from one another. Fluid energy is unable to flow from the upstream conduit 62 to the downstream conduit 66. In Figure 11B, the first 20 and second 22 connection parts are brought together so that the distal leading tip 48 of the stud 46 makes initial contact with the nose end 32 of the core plug 30. The components self-align with one another via the locator features on the opposing heads of the interrupter 65 and safety valve 78. Still, fluid energy is unable to flow from the upstream conduit 62 to the downstream conduit 66.

In Figure 11C, the first connection part 20 is being pressed against the second connection part 22, as can be seen by the stud 46 descending into the socket 24. Although the core plug 30 is fully below the bolt 36, the bolt 36 remains in its set position because the stud catch 50 has not yet aligned with the bolt tooth 38. Although the lower end of the shaft of the interrupter 65 has just made initial contact with an upstanding nub 84 at the base 28 of the socket 24, neither the interrupter 65 nor the safety valve 78 have shifted from their respective positions sealing the ends of the upstream 64 and downstream 68 terminal ends. As such, even at this advanced state, fluid energy is still unable to flow from the upstream conduit 62 to the downstream conduit 66.

In Figure 11D, the first connection part 20 has been pressed in full contact against the second connection part 22. The core plug 30 has reached its fully depressed condition. The stud catch 50 has moved into registry with the bolt tooth 38, enabling the spring-backed bolt 36 to shift rightward trapping the stud 46 in the socket 24. The lower end of the shaft of the interrupter 65 has remained in abutment with the nub 84 while the core plug 30 has continued to descend in the socket 24. This has caused the head of the interrupter 65 to rise above the nose end 32 of the core plug 30, which in turn has pushed the head of the safety valve 78 inside the downstream terminal end 68 thereby creating a flow path for fluid energy from the upstream conduit 62 into the downstream conduit 66. Those of skill in the art will be able to appreciate from Figure 11D that pressurized hydraulic or pneumatic fluid will be able to flow from the upstream conduit 62, around the nub 84, through the core spring 34 and keeper 74, into the skirt-like recess of the core plug 30, around the head of the interrupter 65, into the hole in the distal leading tip 48, around the head of the safety valve 78, through its safety spring 82 and retainer 80, and into the downstream conduit 66 where it is eventually routed to an energy consuming load 56.

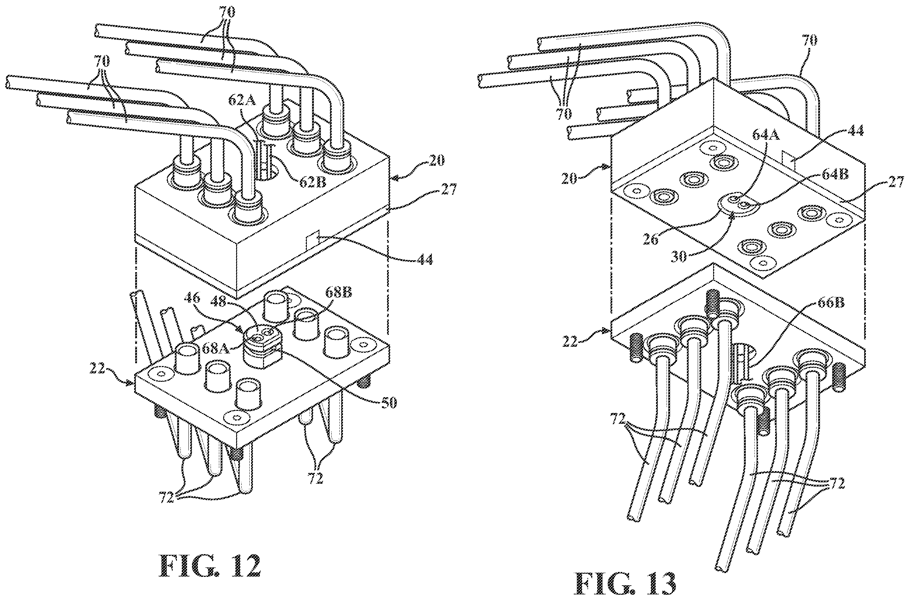

Figures 12 and 13 may be likened to Figures 9 and 10, in that additional upstream conduits 70 are supported in the first connection part 20 but do not pass through the socket 24 or core plug 30, and additional downstream conduits 72 are supported in the second connection part 222 but do not pass through the stud 46. These additional conduits 70, 72 are aligned so as to make respectively operative, fluid power-transmitting connections when the first 20 and second 22 connections parts are coupled via the stud-and socket system of this invention. Thus, in applications requiring more hydraulic or pneumatic connections than can be accommodated through the socket 24 and stud 46, this embodiment offers a convenient solution without sacrificing connection speed or structural integrity.

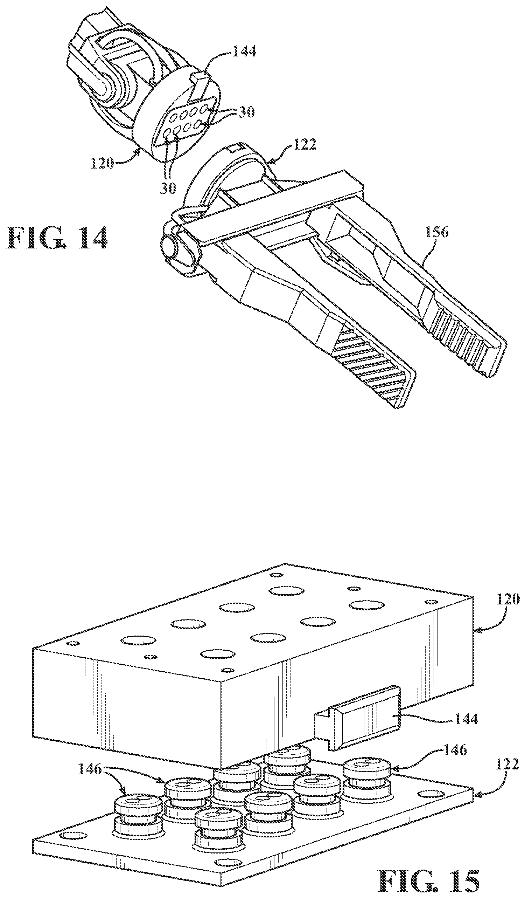

Figures 14 and 15 offer yet another alternative embodiment in which the first 120 and second 122 connection parts may be fitted with a ganged plurality of power-transmitting stud-and-socket coupling systems of the type mentioned. In this example, which by Figure 14 can be seen as suggestive of an industrial robotic application, the first connection part 120 is fitted with a gang of eight (8) sockets 124, and the second connection part 122 a corresponding gang of eight studs 146. Each stud 146 is shown in an exemplary fashion in Figure 15 containing two downstream terminal ends 168, as in the example of Figures 7-10. Although the Figures 7-10 portray embodiments in which the form of energy transmitted is electricity or light, those of skill in the art will appreciate that the embodiment of Figures 14 and 15 could be configured to transfer other forms of energy, including but not limited to pneumatic and hydraulic.

Slidably supported within the first connection part 120 is a single bolt fitted with eight open interior regions, neither of which are visible in Figures 14-15. Notwithstanding the lack of illustration, it will be apparent that one bolt can be configured to interact concurrently with all eight studs 146, thus creating a coupling between the first 120 and second 122 connection parts of eight-fold strength with the capability of eight-fold energy transmission. Naturally, it can be envisioned that if a particular application required a coupling with say eight-fold strength but say only two-fold energy transmission, then six of eight studs 146 could be configured without energy transfer capability, much like those depicted in Figures 3 and 4.

Decoupling of the first 120 and second 122 connection parts is accomplished with a common push-button actuator 144. By depressing the common actuator 144, the single bolt is moved toward its set position such that its teeth disengage from the respective catch on each stud 146 in a concerted manner. As the studs 146 retract, a core plug (not shown) in each socket 124 moves toward its respective extended condition at the socket entrance, just as previously described.

## Claims

1. An energy transmitting stud-and-socket releasable fastening system comprising:
a first connection part (20) associated with an energy source (54), an upstream conduit (62) having an upstream terminal end (64) disposed in said first connection part, said upstream conduit configured to transmit energy from the energy source (54) to said upstream terminal end,
a second connection part (22) associated with an energy consuming load, said second connection part configured to be selectively coupled and decoupled to said first connection part, a downstream conduit (66) having a downstream terminal end (68) disposed in said second connection part, said downstream conduit configured to transmit energy from said downstream terminal end to the load,
a socket (24) disposed in one of said first and second connection parts (20, 22), said socket having an entrance (26), a core plug (30) slidably disposed in said socket for movement between extended and depressed conditions, said core plug having a nose end (32) in registry with said entrance (26) of said socket when said core plug is in said extended condition and recessed inside said socket when said core plug is in said depressed condition, a bolt (36) supported relative to said socket for movement between set and deployed positions,
a stud (46) extending from the other of said first and second connection parts (20, 22), said stud having a distal leading tip (48) configured to displace said core plug away from said entrance of said socket, said stud becoming mechanically constrained within said socket by said bolt when moved from said set position to said deployed position to securely fasten together said first and second connection parts,
one of said upstream and downstream terminal ends (64, 68) disposed in said stud (46), the other of said upstream and downstream terminal ends (64, 68) disposed in said core plug (30) and moveable therewith as said core plug moves between said extended and depressed conditions, wherein said upstream terminal end (64) operatively couples with said downstream terminal end (68) when said stud (48) is securely constrained within said socket to enable transmission of energy from said upstream conduit (62) to said downstream conduit (66); **characterised in that**
the core plug (30) operates like a trigger holding the bolt (36) in its set position;
wherein when the core plug (30) is displaced a sufficient distance away from the entrance (26), the bolt (36) automatically shifts toward its deployed position.

2. The system of Claim 1 wherein said upstream terminal end (64) is disposed in said core plug (30 and moveable therewith as said core plug moves between said extended and depressed conditions, said upstream conduit including an interrupter (65) adjacent said upstream terminal end (64).

3. The system of Claim 2 wherein said interrupter (65) comprises a poppet having an open condition prohibiting the transmission of energy to said upstream terminal end (64) when said core plug is in said depressed condition, said interrupter (65) having a closed condition enabling the transmission of energy to said upstream terminal end when said core plug (30) is in said extended condition.

4. The system of Claim 1 wherein said upstream terminal end (64) aligns with said downstream terminal end (68) when said distal leading tip depresses said core plug away from said socket entrance (26).

5. The system of Claim 1 wherein the energy source (54) is selected from:
electrical energy, said upstream and downstream conduits (62, 66) comprising electrically conductive wires;
fluid energy, said upstream and downstream conduits (62, 66) comprising fluid conductive lines; or
light energy, said upstream and downstream conduits (62, 66) comprising light transmissive wave guides.

6. The system of Claim 1 wherein said socket (24) has a generally D-shaped cross-section, said stud (46) having a generally D-shaped cross-section configured to mate with said D-shaped cross-section of said socket (24).

7. A method of releasably fastening together first (20) and second (22) connection parts and transmitting energy therebetween using an energy transmitting stud-and-socket releasable fastening system, the method comprising:
providing the first connection part (20), being associated with an energy source (54), an upstream conduit (62) having an upstream terminal end (64) disposed in said first connection part (20), said upstream conduit configured to transmit energy from the energy source to said upstream terminal end,
providing the second connection part (22), being associated with an energy consuming load (56), said second connection part configured to be selectively coupled and decoupled to said first connection part, a downstream conduit (66) having a downstream terminal end (68) disposed in said second connection part, said downstream conduit configured to transmit energy from said downstream terminal end to the load (56),
providing a socket (24) disposed in said first connection part (20), said socket having an entrance (26), a core plug (30) slidably disposed in said socket for movement between extended and depressed conditions, said core plug having a nose end (32) in registry with said entrance of said socket when said core plug is in said extended condition and recessed inside said socket when said core plug is in said depressed condition, a bolt (36) supported relative to said socket for movement between set and deployed positions, said upstream terminal end (64) disposed in said core plug (30) and moveable therewith as said core plug (30) moves between said extended and depressed conditions,
providing a stud (46) extending from said second connection part (24), said stud having a distal leading tip (48) configured to displace said core plug away from said entrance of said socket, said stud becoming mechanically constrained within said socket (24) by said bolt (36) upon movement from said set position to said deployed position to securely fasten together said first (20) and second (22) connection parts, said downstream terminal end disposed in said stud (46), maintaining said core plug (30) in a position holding said bolt (36) in said set position during approach of said stud (46); displacing said core plug (30) a sufficient distance away from said entrance (26) by insertion of said stud (46), thereby causing said bolt (36) to shift automatically toward said deployed position, said core plug (30) thus operating like a trigger; and
operatively coupling said upstream terminal end (64) with said downstream terminal end (68) when said stud is securely constrained within said socket (24) to enable transmission of energy from said upstream conduit (62) to said downstream conduit (66).

8. The method of Claim 7 wherein said upstream conduit (62) is provided with an interrupter (65) adjacent said upstream terminal end.

9. The method of Claim 8 wherein said interrupter (65) comprises a poppet having an open condition prohibiting the transmission of energy to said upstream terminal end (64) when said core plug (30) is in said depressed condition, said interrupter having a closed condition enabling the transmission of energy to said upstream terminal end (when said core plug is in said extended condition.

10. The method of Claim 9 wherein said poppet has a backing spring.

11. The method of Claim 7 wherein said upstream terminal end (64) aligns with said downstream terminal end (68) when said distal leading tip depresses said core plug (30) away from said socket entrance.

12. The method of Claim 7 wherein the energy source (54) is selected from:
electrical energy, said upstream and downstream conduits comprising electrically conductive wires;
fluid energy, said upstream and downstream conduits comprising fluid conductive lines; or
light energy, said upstream and downstream conduits comprising light transmissive wave guides.

## Patentansprüche

1. Lösbares Befestigungssystem zur Energieübertragung mit Bolzen-und-Buchsen-Verbindung, umfassend:
ein erstes Verbindungsteil (20), das einer Energiequelle (54) zugeordnet ist, eine stromaufwärtige Leitung (62) mit einem in dem ersten Verbindungsteil angeordneten stromaufwärtigen Endabschnitt (64), wobei die stromaufwärtige Leitung so konfiguriert ist, dass sie Energie von der Energiequelle (54) zu dem stromaufwärtigen Endabschnitt überträgt,
ein zweites Verbindungsteil (22), das einer Energieverbrauchslast zugeordnet ist, wobei das zweite Verbindungsteil so konfiguriert ist, dass es wahlweise mit dem ersten Verbindungsteil gekoppelt und von diesem entkoppelt wird, eine stromabwärtige Leitung (66) mit einem in dem zweiten Verbindungsteil angeordneten stromabwärtigen Endabschnitt (68), wobei die stromabwärtige Leitung so konfiguriert ist, dass sie Energie von dem stromabwärtigen Endabschnitt zu der Last überträgt.
eine Buchse (24), die in einem der ersten und zweiten Verbindungsteile (20, 22) angeordnet ist, wobei die Buchse einen Einlass (26) aufweist, einen Kernstopfen (30), der verschiebbar in der Buchse angeordnet ist, um sich zwischen einer ausgefahrenen Stellung und einer eingedrückten Stellung zu bewegen, wobei der Kernstopfen ein Nasenende (32) aufweist, das bei in der ausgefahrenen Stellung befindlichem Kernstopfen an dem Einlass (26) der Buchse ausgerichtet ist und bei in der eingedrückten Stellung befindlichem Kernstopfen in die Buchse zurückversetzt ist, einen Bolzen (36), der bezüglich der Buchse zur Bewegung zwischen einer Setzstellung und einer ausgefahrenen Stellung gelagert ist,
einen Zapfen (46), der sich von dem anderen der ersten und zweiten Verbindungsteile (20, 22) erstreckt, wobei der Zapfen eine distale vordere Spitze (48) aufweist, die so konfiguriert ist, dass sie den Kernstopfen von dem Einlass der Buchse wegbewegt, wobei der Zapfen durch den Bolzen mechanisch innerhalb der Buchse gehalten wird, wenn der Bolzen aus der Setzstellung in die ausgefahrene Stellung bewegt wird, um die ersten und zweiten Verbindungsteile sicher miteinander zu verbinden,
wobei entweder das stromaufwärtige oder das stromabwärtige Ende (64, 68) in dem Zapfen (46) angeordnet ist, das andere des stromaufwärtigen und stromabwärtigen Endes (64, 68) in dem Kernstopfen (30) angeordnet und mit diesem bewegbar ist, wenn sich der Kernstopfen zwischen der ausgefahrenen Stellung und der eingedrückten Stellung bewegt, wobei das stromaufwärtige Ende (64) mit dem stromabwärtigen Ende (68) wirkend gekoppelt wird, wenn der Zapfen (48) sicher innerhalb der Buchse gehalten wird, um eine Übertragung von Energie von der stromaufwärtigen Leitung (62) zu der stromabwärtigen Leitung (66) zu ermöglichen;
**dadurch gekennzeichnet, dass**
der Kernstopfen (30) wie ein Auslöser wirkt, der den Bolzen (36) in seiner Setzstellung hält;
wobei, wenn der Kernstopfen (30) um eine ausreichende Strecke von dem Einlass (26) wegbewegt wird, der Bolzen (36) automatisch in Richtung seiner ausgefahrenen Stellung bewegt wird.

2. System nach Anspruch 1, wobei der stromaufwärtige Endabschnitt (64) in dem Kernstopfen (30) angeordnet und mit diesem bewegbar ist, wenn sich der Kernstopfen zwischen der ausgefahrenen Stellung und der eingedrückten Stellung bewegt, wobei die stromaufwärtige Leitung einen Unterbrecher (65) benachbart zu dem stromaufwärtigen Endabschnitt (64) einschließt.

3. System nach Anspruch 2, wobei der Unterbrecher (65) ein Tellerventil umfasst, das eine geöffnete Stellung aufweist, in der eine Übertragung von Energie zu dem stromaufwärtigen Endabschnitt (64) verhindert wird, wenn sich der Kernstopfen in der eingedrückten Stellung befindet, und wobei der Unterbrecher (65) eine geschlossene Stellung aufweist, in der eine Übertragung von Energie zu dem stromaufwärtigen Endabschnitt ermöglicht wird, wenn sich der Kernstopfen (30) in der ausgefahrenen Stellung befindet.

4. System nach Anspruch 1, wobei der stromaufwärtige Endabschnitt (64) an dem stromabwärtigen Endabschnitt (68) ausgerichtet ist, wenn die distale vordere Spitze den Kernstopfen von dem Einlass (26) der Buchse wegdrückt.

5. System nach Anspruch 1, wobei die Energiequelle (54) ausgewählt ist aus:
elektrischer Energie, wobei die stromaufwärtige und die stromabwärtige Leitung (62, 66) elektrisch leitfähige Drähte umfassen;
Fluidenergie, wobei die stromaufwärtige und die stromabwärtige Leitung (62, 66) fluidleitende Leitungen umfassen; oder
Lichtenergie, wobei die stromaufwärtige und die stromabwärtige Leitung (62, 66) lichtübertragende Wellenleiter umfassen.

6. System nach Anspruch 1, wobei die Buchse (24) einen im Allgemeinen D-förmigen Querschnitt aufweist, wobei der Zapfen (46) einen im Allgemeinen D-förmigen Querschnitt aufweist, der so konfiguriert ist, dass er mit dem D-förmigen Querschnitt der Buchse (24) zusammenpasst.

7. Verfahren zum lösbaren Verbinden eines ersten (20) und eines zweiten (22) Verbindungsteils und zum Übertragen von Energie zwischen diesen unter Verwendung eines lösbaren, energieübertragenden Zapfen-Buchsen-Verbindungssystems, das Verfahren umfassend:
Bereitstellen des ersten Verbindungsteils (20), das einer Energiequelle (54) zugeordnet ist, einer stromaufwärtigen Leitung (62) mit einem in dem ersten Verbindungsteil (20) angeordneten stromaufwärtigen Endabschnitt (64), wobei die stromaufwärtige Leitung so konfiguriert ist, dass sie Energie von der Energiequelle zu dem stromaufwärtigen Endabschnitt überträgt,
Bereitstellen des zweiten Verbindungsteils (22), das einer Energieverbrauchslast (56) zugeordnet ist, wobei das zweite Verbindungsteil so konfiguriert ist, dass es wahlweise mit dem ersten Verbindungsteil gekoppelt und von diesem entkoppelt wird, eine stromabwärtige Leitung (66) mit einem in dem zweiten Verbindungsteil angeordneten stromabwärtigen Endabschnitt (68), wobei die stromabwärtige Leitung so konfiguriert ist, dass sie Energie von dem stromabwärtigen Endabschnitt zu der Last (56) überträgt.
Bereitstellen einer Buchse (24), die in dem ersten Verbindungsteil (20) angeordnet ist, wobei die Buchse einen Einlass (26) aufweist, eines Kernstopfens (30), der verschiebbar in der Buchse angeordnet ist, um sich zwischen einer ausgefahrenen Stellung und einer eingedrückten Stellung zu bewegen, wobei der Kernstopfen ein Nasenende (32) aufweist, das bei in der ausgefahrenen Stellung befindlichem Kernstopfen an dem Einlass der Buchse ausgerichtet ist und bei in der eingedrückten Stellung befindlichem Kernstopfen in die Buchse zurückversetzt ist, eines Bolzens (36), der bezüglich der Buchse zur Bewegung zwischen einer Setzstellung und einer ausgefahrenen Stellung gelagert ist, wobei der stromaufwärtige Endabschnitt (64) in dem Kernstopfen (30) angeordnet und mit diesem bewegbar ist, wenn sich der Kernstopfen (30) zwischen der ausgefahrenen Stellung und der eingedrückten Stellung bewegt,
Bereitstellen eines Zapfens (46), der sich von dem zweiten Verbindungsteil (24) erstreckt, wobei der Zapfen eine distale vordere Spitze (48) aufweist, die so konfiguriert ist, dass sie den Kernstopfen von dem Einlass der Buchse wegbewegt, wobei der Zapfen bei einer Bewegung des Bolzens aus der Setzstellung in die ausgefahrene Stellung durch den Bolzen (36) mechanisch innerhalb der Buchse (24) gehalten wird, um das erste (20) und das zweite (22) Verbindungsteil sicher miteinander zu verbinden, wobei der stromabwärtige Endabschnitt in dem Zapfen (46) angeordnet ist,
Halten des Kernstopfens (30) in einer Position, in der der Bolzen (36) während der Annäherung des Zapfens (46) in der Setzstellung gehalten wird; Verschieben des Kernstopfens (30) um eine ausreichende Strecke von dem Einlass (26) weg durch Einführen des Zapfens (46), wodurch bewirkt wird, dass sich der Bolzen (36) automatisch in Richtung der ausgefahrenen Stellung bewegt, wobei der Kernstopfen (30) somit wie ein Auslöser wirkt; und
wirkendes Koppeln des stromaufwärtigen Endabschnitts (64) mit dem stromabwärtigen Endabschnitt (68), wenn der Zapfen sicher innerhalb der Buchse (24) gehalten wird, um eine Übertragung von Energie von der stromaufwärtigen Leitung (62) zu der stromabwärtigen Leitung (66) zu ermöglichen.

8. Verfahren nach Anspruch 7, wobei die stromaufwärtige Leitung (62) mit einem Unterbrecher (65) benachbart zu dem stromaufwärtigen Endabschnitt versehen ist.

9. Verfahren nach Anspruch 8, wobei der Unterbrecher (65) ein Tellerventil umfasst, das eine geöffnete Stellung aufweist, in der eine Übertragung von Energie zu dem stromaufwärtigen Endabschnitt (64) verhindert wird, wenn sich der Kernstopfen (30) in der eingedrückten Stellung befindet, und wobei der Unterbrecher eine geschlossene Stellung aufweist, in der eine Übertragung von Energie zu dem stromaufwärtigen Endabschnitt ermöglicht wird, wenn sich der Kernstopfen im ausgefahrenen Zustand befindet.

10. Verfahren nach Anspruch 9, wobei das Tellerventil eine Stützfeder aufweist.

11. Verfahren nach Anspruch 7, wobei der stromaufwärtige Endabschnitt (64) an dem stromabwärtigen Endabschnitt (68) ausgerichtet ist, wenn die distale vordere Spitze den Kernstopfen (30) von dem Einlass der Buchse wegdrückt.

12. Verfahren nach Anspruch 7, wobei die Energiequelle (54) ausgewählt ist aus:
elektrischer Energie, wobei die stromaufwärtige und die stromabwärtige Leitung elektrisch leitfähige Drähte umfassen;
Fluidenergie, wobei die stromaufwärtige und die stromabwärtige Leitung fluidleitende Leitungen umfassen; oder
Lichtenergie, wobei die stromaufwärtige und die stromabwärtige Leitung lichtübertragende Wellenleiter umfassen.

## Revendications

1. Système de fixation libérable à goujon et douille de transmission d'énergie comprenant :
une première pièce de connexion (20) associée à une source d'énergie (54), un conduit amont (62) présentant une extrémité terminale amont (64) disposée dans ladite première pièce de connexion, ledit conduit amont étant conçu pour transmettre l'énergie de la source d'énergie (54) à ladite extrémité terminale amont,
une seconde pièce de connexion (22) associée à une charge consommatrice d'énergie, ladite seconde pièce de connexion étant conçue pour être sélectivement accouplée et découplée à ladite première pièce de connexion, un conduit aval (66) présentant une extrémité terminale aval (68) disposée dans ladite seconde pièce de connexion, ledit conduit aval étant conçu pour transmettre l'énergie de ladite extrémité terminale aval à la charge,
une douille (24) disposée dans l'une desdites première et seconde pièces de connexion (20, 22), ladite douille présentant une entrée (26), un bouchon central (30) disposé coulissant dans ladite douille pour le déplacement entre des états étendu et enfoncé, ledit bouchon central présentant une extrémité de nez (32) en alignement avec ladite entrée (26) de ladite douille lorsque ledit bouchon central est dans ledit état étendu et encastré à l'intérieur de ladite douille lorsque ledit bouchon central est dans ledit état enfoncé, un boulon (36) supporté par rapport à ladite douille pour le déplacement entre les positions définie et déployée,
un goujon (46) s'étendant à partir de l'autre desdites première et seconde pièces de connexion (20, 22), ledit goujon présentant une pointe avant distale (48) conçue pour éloigner ledit bouchon central de ladite entrée de ladite douille, ledit goujon devenant mécaniquement contraint à l'intérieur de ladite douille par ledit boulon lorsqu'il est déplacé de ladite position définie à ladite position déployée pour fixer solidement ensemble lesdites première et seconde pièces de connexion,
une desdites extrémités terminales amont et aval (64, 68) disposées dans ledit goujon (46), l'autre desdites extrémités terminales amont et aval (64, 68) disposée dans ledit bouchon central (30) et peut se déplacer sur ce dernier lorsque ledit bouchon central se déplace entre lesdits états étendu et enfoncé, dans lequel ladite extrémité terminale amont (64) est accouplée de manière fonctionnelle avec ladite extrémité terminale aval (68) lorsque ledit goujon (48) est solidement contraint à l'intérieur de ladite douille pour permettre la transmission d'énergie dudit conduit amont (62) audit conduit aval (66) ;
**caractérisé en ce que**
le bouchon central (30) fonctionne comme une gâchette maintenant le boulon (36) dans sa position définie ;
dans lequel, lorsque le bouchon central (30) est éloigné à une distance suffisante de l'entrée (26), le boulon (36) bascule automatiquement vers sa position déployée.

2. Système selon la revendication 1, dans lequel ladite extrémité terminale amont (64) est disposée dans ledit bouchon central (30) et peut se déplacer sur ce dernier lorsque ledit bouchon central se déplace entre lesdits états étendu et enfoncé, ledit conduit amont comportant un interrupteur (65) adjacent à ladite extrémité terminale amont (64).

3. Système selon la revendication 2, dans lequel ledit interrupteur (65) comprend un clapet présentant un état ouvert interdisant la transmission d'énergie à ladite extrémité terminale amont (64) lorsque ledit bouchon central est dans ledit état enfoncé, ledit interrupteur (65) présentant un état fermé permettant la transmission d'énergie à ladite extrémité terminale amont lorsque ledit bouchon central (30) est dans ledit état étendu.

4. Système selon la revendication 1, dans lequel ladite extrémité terminale amont (64) s'aligne avec ladite extrémité terminale aval (68) lorsque ladite pointe avant distale enfonce ledit bouchon central loin de ladite entrée de douille (26).

5. Système selon la revendication 1 dans lequel le source d'énergie (54) est sélectionné parmi :
l'énergie électrique, lesdits conduits amont et aval (62, 66) comprenant des fils électriquement conducteurs ;
l'énergie fluidique, lesdits conduits amont et aval (62, 66) comprenant des conduites conductrices de fluide ; ou
l'énergie lumineuse, lesdits conduits amont et aval (62, 66) comprenant des guides d'ondes transmettant la lumière.

6. Système selon la revendication 1, dans lequel ladite douille (24) présente une section transversale d'une façon générale en forme de D, ledit goujon (46) présentant une section transversale d'une façon générale en forme de D conçue pour s'adapter à ladite section transversale en forme de D de ladite douille (24).

7. Procédé de fixation libérable des première (20) et seconde (22) pièces de connexion et de transmission d'énergie entre elles à l'aide d'un système de fixation libérable à goujon et douille de transmission d'énergie, le procédé comprenant :
la fourniture d'une première pièce de connexion (20), étant associée à une source d'énergie (54), un conduit amont (62) présentant une extrémité terminale amont (64) disposée dans ladite première pièce de connexion (20), ledit conduit amont étant conçu pour transmettre l'énergie de la source d'énergie à ladite extrémité terminale amont,
la fourniture d'une seconde pièce de connexion (22), étant associée à une charge consommatrice d'énergie (56), ladite seconde pièce de connexion étant conçue pour être sélectivement accouplée et découplée à ladite première pièce de connexion, un conduit aval (66) présentant une extrémité terminale aval (68) disposée dans ladite seconde pièce de connexion, ledit conduit aval étant conçu pour transmettre l'énergie de ladite extrémité terminale aval à la charge (56),
la fourniture d'une douille (24) disposée dans la dite première pièce de connexion (20), ladite douille présentant une entrée (26), un bouchon central (30) disposé coulissant dans ladite douille pour le déplacement entre des états étendu et enfoncé, ledit bouchon central présentant une extrémité de nez (32) en alignement avec ladite entrée de ladite douille lorsque ledit bouchon central est dans ledit état étendu et encastré à l'intérieur de ladite douille lorsque ledit bouchon central est dans ledit état enfoncé, un boulon (36) supporté par rapport à ladite douille pour le déplacement entre les positions définie et déployée, ladite extrémité terminale amont (64) est disposée dans ledit bouchon central (30) et peut se déplacer sur ce dernier lorsque ledit bouchon central (30) se déplace entre lesdits états étendu et enfoncé,
la fourniture d'un goujon (46) s'étendant à partir de l'autre de ladite seconde pièce de connexion (24), ledit goujon présentant une pointe avant distale (48) conçue pour éloigner ledit bouchon central de ladite entrée de ladite douille, ledit goujon devenant mécaniquement contraint à l'intérieur de ladite douille (24), par ledit boulon (36) sous l'effet du déplacement de ladite position définie à ladite position déployée pour fixer solidement ensemble lesdites première (20) et seconde (22) pièces de connexion, ladite extrémité terminale aval disposée dans ledit goujon (46),
le maintien dudit bouchon central (30) dans une position maintenant ledit boulon (36) dans ladite position définie pendant l'approche dudit goujon (46) ; le déplacement dudit bouchon central (30) à une distance suffisante loin de ladite entrée (26) par insertion dudit goujon (46), provoquant ainsi le déplacement automatique dudit boulon (36) vers ladite position déployée, ledit bouchon central (30) fonctionnant ainsi comme une gâchette ; et
le couplage fonctionnel de ladite extrémité terminale amont (64) avec ladite extrémité terminale aval (68) lorsque ledit goujon est solidement contraint à l'intérieur de ladite douille (24) pour permettre la transmission d'énergie à partir dudit conduit amont (62) audit conduit aval (66).

8. Procédé selon la revendication 7, dans lequel ledit conduit amont (62) est muni d'un interrupteur (65) adjacent à ladite extrémité terminale amont.

9. Procédé selon la revendication 8, dans lequel ledit interrupteur (65) comprend un clapet présentant un état ouvert interdisant la transmission d'énergie à ladite extrémité terminale amont (64) lorsque ledit bouchon central (30) est dans ledit état enfoncé, ledit interrupteur présentant un état fermé permettant la transmission d'énergie à ladite extrémité terminale amont lorsque ledit bouchon central est dans ledit état étendu.

10. Procédé selon la revendication 9, dans lequel ledit clapet présente un ressort d'appui.

11. Procédé selon la revendication 7, dans lequel ladite extrémité terminale amont (64) s'aligne avec ladite extrémité terminale aval (68) lorsque ladite pointe avant distale enfonce ledit bouchon central (30) loin de ladite entrée de douille.

12. Procédé selon la revendication 7, dans lequel le source d'énergie (54) est sélectionné parmi :
l'énergie électrique, lesdits conduits amont et aval comprenant des fils électriquement conducteurs ;
l'énergie fluidique, lesdits conduits amont et aval comprenant des conduites conductrices de fluide ; ou
l'énergie lumineuse, lesdits conduits amont et aval comprenant des guides d'ondes transmettant la lumière.
